# EUROPEAN PATENT APPLICATION

(11) **EP 3 971 712 A1**
(43) Date of publication of application: **23.03.2022**
(21) Application number: 21164194.9
(22) Date of filing: 23.03.2021
(51) Int. Cl.: G06F 9/38, G06F 9/50, G06N 3/063, G10L 17/18, G10L 25/30

(54) **VOICE PROCESSING SYSTEM AND METHOD, ELECTRONIC DEVICE AND READABLE STORAGE MEDIUM**

(30) Priority: 22.09.2020 CN 202011001663
(71) Applicant: Beijing Baidu Netcom Science and Technology Co., Ltd., Beijing 100085 (CN)
(72) Inventor: TIAN, Chao, Beijing, Beijing 100085 (CN); JIA, Lei, Beijing, Beijing 100085 (CN); YAN, Xiaoping, Beijing, Beijing 100085 (CN); WEN, Junhui, Beijing, Beijing 100085 (CN)
(74) Representative: dompatent von Kreisler Selting Werner - Partnerschaft von Patent- und Rechtsanwälten mbB

(57) **Abstract**

The present application discloses a voice processing system and method, an electronic device, a readable storage medium and a computer program product, which relates to the field of voice processing technologies. The voice processing system includes: a neural-network processing unit (NPU) and an RISC-V processor; wherein the RISC-V processor includes predefined NPU instructions, and the RISC-V processor is configured to send the NPU instructions to the NPU to cause the NPU to perform corresponding neural network computation; the NPU includes a memory unit and a computing unit, and the memory unit includes a plurality of storage groups; the computing unit is configured to execute one of main computation, special computation, auxiliary computation and complex instruction set computing (CISC) control according to the received NPU instructions. The voice processing method includes: acquiring voice data to be processed; taking the voice data to be processed as input data of a voice processing system, and performing, by the voice processing system, the neural network computation on the input data to obtain an output result; and taking the output result as a voice processing result of the voice data to be processed. With the present application, an off-line processing efficiency of the voice processing system may be improved.

## Description

### Field of the Disclosure

The present application relates to the field of data processing technologies, and particularly to a voice processing system and method, an electronic device, a readable storage medium and a computer program product in the field of voice processing technologies.

### Background of the Disclosure

Voice processing, especially off-line voice processing, will become a future trend, including off-line voice recognition/off-line voice synthesis/voice-semantic integration/semantic confidence/voice wake-up, or the like. Usually, an ARM scheme or a scheme of an ARM plus a neural network processor is adopted in an off-line voice processing system in the prior art. However, since the above-mentioned chip schemes have certain limitation in terms of functions and calculation power, the off-line voice processing system based on the two above-mentioned schemes is unable to realize high-performance off-line voice processing.

### Summary of the Disclosure

According to the technical solution adopted in the present application to solve the technical problem, there is provided a voice processing system, including: a neural-network processing unit (NPU) and an RISC-V processor; wherein the RISC-V processor includes predefined NPU instructions, and the RISC-V processor is configured to send the NPU instructions to the NPU to cause the NPU to perform corresponding neural network computation; the NPU includes a memory unit and a computing unit, and the memory unit includes a plurality of storage groups; the computing unit is configured to execute one of main computation, special computation, auxiliary computation and complex instruction set computing (CISC) control according to the received NPU instructions.

According to the technical solution adopted in the present application to solve the technical problem, there is provided a voice processing method, including: acquiring voice data to be processed; taking the voice data to be processed as input data of a voice processing system, and processing, by the voice processing system, the input data to obtain an output result; and taking the output result as a voice processing result of the voice data to be processed.

An electronic device includes: at least one processor; a memory connected with the at least one processor communicatively; and the above-mentioned voice processing system, wherein the memory stores instructions executable by the at least one processor to enable the at least one processor to perform the above-mentioned method.

There is provided a non-transitory computer readable storage medium with computer instructions stored thereon, wherein the computer instructions are used for causing a computer to perform the above-mentioned method.

There is provided a computer program product, comprising instructions which, when the program is executed by a computer, cause the computer to perform the above-mentioned method.

An embodiment of the above-mentioned application has the following advantages or beneficial effects: with the present application, an off-line processing efficiency of a voice processing task may be improved. Adoption of the technical means of the predefined NPU instructions in the RISC-V processor and the architectural design between the memory unit and the computing unit in the NPU overcomes the technical problem in the prior art, and achieves the technical effect of improving the off-line processing efficiency of the voice processing task.

Other effects of the above-mentioned alternatives will be described below in conjunction with embodiments.

### Brief Description of Drawings

The drawings are used for better understanding the present solution and do not constitute a limitation of the present application. In the drawings:
Fig. 1 is a schematic diagram according to a first embodiment of the present application;
Fig. 2 is a schematic diagram according to a second embodiment of the present application;
Fig. 3 is a schematic diagram according to a third embodiment of the present application;
Fig. 4 is a schematic diagram according to a fourth embodiment of the present application; and
Fig. 5 is a block diagram of an electronic device configured to implement the embodiment of the present application.

### Detailed Description of Preferred Embodiments

The following part will illustrate exemplary embodiments of the present application with reference to the drawings, including various details of the embodiments of the present application for a better understanding. The embodiments should be regarded only as exemplary ones. Therefore, those skilled in the art should appreciate that various changes or modifications can be made with respect to the embodiments described herein without departing from the scope and spirit of the present application. Similarly, for clarity and conciseness, the descriptions of the known functions and structures are omitted in the descriptions below.

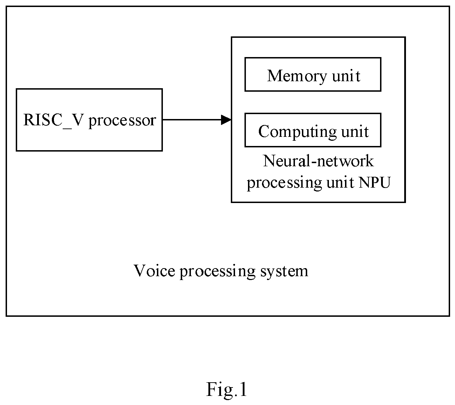

Fig. 1 is a schematic diagram according to a first embodiment of the present application. As shown in Fig. 1, a voice processing system according to the present embodiment includes:
a neural-network processing unit (NPU) and an RISC-V processor;
wherein the RISC-V processor includes predefined NPU instructions, and the RISC-V processor is configured to send the NPU instructions to the NPU to cause the NPU to perform corresponding neural network computation;
the NPU includes a memory unit and a computing unit, and the memory unit includes a plurality of storage groups; the computing unit is configured to execute one of main computation, special computation, auxiliary computation and complex instruction set computer (CISC) control according to the received NPU instructions.

In the voice processing system according to the present embodiment, based on the neural-network processing unit (NPU), neural network computation involved in a voice processing model may be rapidly and accurately implemented off-line with the predefined NPU instructions in the RISC-V processor and the architectural design between the memory unit and the computing unit in the NPU, thereby improving a processing efficiency of an off-line voice processing task.

The RISC-V processor in the present embodiment is based on RISC-V (an open source instruction set architecture based on a reduced instruction set principle), and includes the NPU instructions predefined for neural network operations.

The predefined NPU instructions included in the RISC-V processor in the present embodiment include instructions dedicated to acceleration in neural network computation, in addition to basic vector operation instructions. Currently, all the instructions used by the NPU are general, and no instructions are specially designed for neural network computation, especially for a voice processing network, such that in the prior art, the NPU requires a quite complex computation process when performing neural network computation, resulting in low computation of the NPU in the off-line voice processing process.

The basic vector operation instructions involved in the predefined NPU instructions in the present embodiment include vector logic operation instructions (for example, AND, OR, NOT, and XOR), vector relation operation instructions (for example, GE, GT, LE, LT, NE, and EQ), and vector arithmetic operation instructions (for example, ADD, SUB, and MUL).

In the present embodiment, the instructions dedicated to acceleration in neural network computation in the predefined NPU instructions include: a vector summation instruction (SUM) which is used for vector summation computation in a softmax layer in a neural network, and is an auxiliary computation instruction; a pooling instruction (POOLING) for a pooling operation in the neural network; a first dot product computation instruction (DOT_PORD) for calculating dot products among vectors in matrix operations related to a fully connected network, an RNN, or the like; a second dot product computation instruction (ATTEN) for calculating dot products between vectors and matrices in matrix operations related to an attention model, wherein the first dot product computation instruction and the second dot product computation instruction are main computation instructions; a vector transcendental function instruction (ACT, SIN, COS, EXP, LOG, SQRT, RSQRT and RECIPROCAL) which is used for computing transcendental functions, such as activation functions, or the like, and is a special computation instruction; a vector accessing instruction (VLOAD) for loading vectors; a vector storage instruction (VSTORE) for storing vectors; a vector lookup instruction (MAX, MIN and TOPK) for looking up the maximum, minimum, maximum N values and their positions, wherein TOPK is a specific instruction in WaveRNN; a flow control instruction (LOOP_START and LOOP_END) which may be nested and used to implement a dual loop; a complex instruction set computing (CISC) Instruction for the NPU to convert specific computation into computation taken over by hardware, such as computation of multiplication of vectors by matrices or computation of softmax, wherein the CISC Instruction is a CISC control Instruction; a scalar floating point instruction (FPALU) for calculating a floating point of a scalar; and a data format conversion instruction (IMG2COL, and Matrix_TRANS), wherein the IMG2COL instruction is used for convolved data conversion, i.e., conversion of convolved input data into a matrix, and the matrix TRANS instruction is used to transpose an input matrix or parameter matrix.

It may be understood that the transcendental functions include RELU6, RELU, SIGMOID, TANH, or the like. The vector transcendental function instruction ACT computes SIGMOD and TANH by performing multi-order derivative polynomial approximation (Taylor formula) using a table lookup method, computes RELU6 and RELU using a linear computation method, and calculates transcendental functions, such as SIN/COS/EXP/LOG/SQRT/RSQRT/RECIPROCAL, or the like, using a CORDIC algorithm, and the computation process is implemented using a floating point-like format.

That is, in the present embodiment, an instruction set is specially designed to perform the computation of the neural network, especially the neural network for voice processing, thereby avoiding redundancy of the instruction set, and improving the computation efficiency of the neural network.

The RISC-V processor in the present embodiment acquires the predefined NPU instructions from the instruction set, and then sends the acquired NPU instructions to the NPU, such that the NPU performs the corresponding computation operation according to the received NPU instructions.

In addition to being connected with the RISC-V processor, the NPU in the present embodiment may interact with an external bus through a direct memory access (DMA) interface, thereby loading data in an external DDR.

In the present embodiment, the plurality of storage groups in the memory unit of the NPU are configured to store model parameter data of the neural network and intermediate data generated in a model computation process of the neural network respectively.

In the present embodiment, memory resources of the memory unit of the NPU are divided into the plural storage groups using a grouping mechanism, such that the DMA may access another storage group while the NPU accesses one storage group, thereby realizing parallel execution of data loading and data computation operations and improving the processing efficiency of the NPU.

It may be appreciated that the NPU in the present embodiment may load data according to the VLOAD instruction or store data according to the VSTORE instruction sent by the RISC-V processor.

Since the neural networks corresponding to different voice processing operations have different computation amounts when performing computation, the memory size of the memory unit in the present embodiment is required to be determined in advance according to the neural network used for the voice processing operation, that is, is customized, so as to ensure that the memory unit in the NPU has a high running efficiency when running different supported voice processing networks. In the present embodiment, the network supported by the NPU includes: a voice recognition network, a voice synthesis network, a voice-semantic integrated network, a semantic confidence network, a voice wake-up network, or the like.

During determination of the memory size of the memory unit in the present embodiment, an optional implementation which may be adopted includes: setting an initial memory size of the memory unit, wherein the set initial memory size is required to be greater than the size of a core layer of the supported neural network, so as to ensure that the memory unit may support the running of different neural networks; determining corresponding running information of the memory unit in the initial memory size, wherein the running information may be a reading frequency, a reading speed, or the like; and when the determined running information does not meet a preset requirement, adjusting the initial memory size, performing the operation repeatedly until the determined running information meets the preset requirement, and taking an adjustment result of the initial memory size as the memory size of the memory unit.

The core layer of the neural network in the present embodiment is configured to complete main computation of the neural network, for example, an RNN layer in a WaveRNN. In the present embodiment, the memory size of the memory unit in the NPU is determined with this method, such that when the NPU runs different neural networks, the memory unit has a high running efficiency, thereby further improving the running efficiency of the NPU.

The computing unit in the present embodiment performs one of main computation, special computation, auxiliary computation, and CISC control according to the received NPU instructions.

For example, the computing unit in the present embodiment may perform the main computation according to the first dot product computation instruction or the second dot product computation instruction, the special computation according to the transcendental function instruction, the CISC control according to the CISC instruction, and the auxiliary computation according to the vector summation instruction.

In the present embodiment, when the computation unit of the NPU performs the main computation, an optional implementation which may be adopted includes: completing the neural network computation by an operation of multiplying matrices by matrices or by vectors, wherein the neural network computation in the present embodiment includes complex number computation, convolution computation, or the like. In the present embodiment, with the above-mentioned main computation method, vectors converted into real numbers in complex number computation, convolution computation, or the like, involved in the neural network may be subjected to addition, subtraction, multiplication and division, thereby simplifying hardware design in the NPU.

Since the voice processing operations, such as voice recognition, semantic confidence, or the like, have precision requirements, some of the neural network computation is completed by directly multiplying matrices or matrices by vectors, thus reducing computation precision. Therefore, in the present embodiment, the computation precision is improved by converting data formats of the matrices and the vectors.

Therefore, when the NPU in the present embodiment performs the main computation, an optional implementation which may be adopted includes: converting the format of the input data into a floating point format with half precision, and converting the format of the model parameter data of the neural network into an int8 format, wherein int is an identifier for defining an integer type variable, and int8 represents a signed integer with 8 bits; and completing the main operation of the input data and the model parameter data by means of multiplying the half precision by int8.

For the neural network using the attention model or a complex convolution model, a higher-precision computation manner is required to be used for implementing attention computation or complex convolution computation. Therefore, the computing unit of the NPU in the present embodiment may perform the main computation further by: in response to a model used by the neural network being a preset model, converting the formats of the input data and the model parameter data into the floating point formats with half precision; and completing the main operation of the input data and the model parameter data by means of multiplying the half precision by the half precision.

That is, in the present embodiment, the data format of the matrices or the vectors may be further converted, and corresponding matrix operations may be then performed according to the data after the data format conversion, thus improving the precision and efficiency of the neural network computation.

The computing unit in the present embodiment may convert the data format according to the data format conversion instruction (for example, IMG2COL or Matrix_TRANS), and complete the main computation according to the first dot product computation instruction (DOT_PROD) or the second dot product computation instruction (ATTEN).

In the present embodiment, when the computing unit of the NPU performs the special computation, an optional implementation which may be adopted includes: in response to the received NPU instruction being the vector transcendental function instruction (for example, ACT, SIN, COS, or the like), determining the type of the transcendental function; and completing the special computation of the transcendental function utilizing a computation method corresponding to the determined function type.

The computing unit in the present embodiment may compute SIN, COS, EXP, LOG, SQRT and other functions with the coordinate rotation digital compute (CORDIC) algorithm, SIGMOID, TANH and other activation functions with the table lookup method, and RELU, RELU6 and other activation functions with the linear computation method.

In the present embodiment, the computing unit of the NPU performs the auxiliary computation by converting a convolutional network into the fully connected network, and an optional implementation which may be adopted includes: converting input data of the convolutional network into a matrix; and performing full-connection computation according to the matrix obtained by conversion to finish the auxiliary computation.

The computing unit in the present embodiment may complete the matrix conversion according to the data format conversion instruction (Matrix_TRANS), and then the full connection computation of the matrix according to the vector summation instruction (SUM).

When the computing unit of the NPU performs the CISC control, an optional implementation which may be adopted includes: in response to the received NPU instruction being the CISC instruction, inputting the input data and the model parameter data into specially designed hardware; and acquiring output data returned by the hardware to complete the CISC control. That is, when the computing unit performs the CISC control, the computation is performed by the corresponding hardware, instead of the NPU itself.

Since the NPU has certain limitation on the input data, in order to further improve the computation efficiency of the computing unit in the NPU, before the data is input into the NPU, the implementation in the present embodiment may further include: aligning the input data, and inputting the aligned data into the NPU.

It may be understood that the NPU in the present embodiment may further include a register unit configured to buffer data read from the memory unit.

According to the above-mentioned technical solution, by the predefined NPU instructions and the architectural design of the memory unit and the computing unit in the NPU, the off-line voice processing task may be accurately and rapidly completed by the off-line voice processing system based on the NPU, thereby improving the computation efficiency and precision.

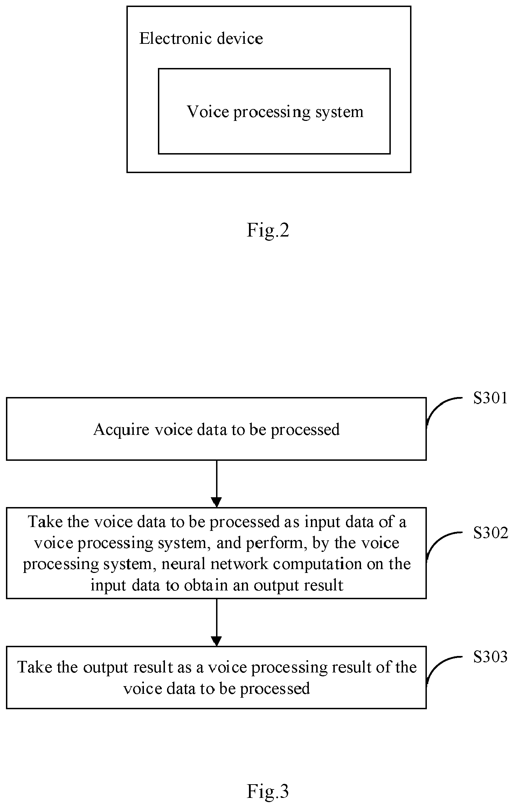

Fig. 2 is a schematic diagram according to a second embodiment of the present application.

Fig. 2 shows a schematic structural diagram of an electronic device according to the present application. The electronic device according to the present embodiment may be configured as a PC, a cloud device, a mobile device, a smart sound box, or the like, and the mobile device may be configured as, for example, hardware devices with various operating systems, touch screens, and/or display screens, such as a mobile phone, a tablet computer, a personal digital assistant, a wearable device, an in-vehicle device, or the like.

As shown in Fig. 2, the electronic device may include the voice processing system according to the previous embodiment of the present application.

Fig. 3 is a schematic diagram according to a third embodiment of the present application. As shown in Fig. 3, a voice processing method according to the present embodiment may include the following steps:
S301: acquiring voice data to be processed;
S302: taking the voice data to be processed as input data of a voice processing system, and performing, by the voice processing system, neural network computation on the input data to obtain an output result; and
S303: taking the output result as a voice processing result of the voice data to be processed.

The voice processing system used in the present embodiment may support neural networks for different voice processing operations, such as a voice recognition network, a voice synthesis network, a voice-semantic integrated network, a voice confidence network, a voice wake-up network, or the like. Therefore, in the present embodiment, different types of voice processing operations may be performed on the voice data to be processed, and the obtained voice processing result may be a voice recognition result, a voice synthesis result, a voice-semantic integrated result, a voice confidence result, a voice wake-up result, or the like.

Since the voice processing system rapidly and accurately processes the neural network computation related to the voice processing task by the predefined NPU instructions in the RISC-V processor and the architectural design between the memory unit and the computing unit in the NPU, the accuracy and efficiency of the off-line voice processing operation may be improved with the voice processing method according to the present embodiment.

Specifically, in S302 in the present embodiment, when the neural network computation is performed on the input data by the voice processing system to obtain the output result, an optional implementation which may be adopted includes: performing, by the NPU in the voice processing system, the neural network computation corresponding to the received NPU instructions on the input data according to the NPU instructions sent by the RISC-V processor; and taking the obtained computation result as the output result. In the present embodiment, the process of performing the neural network computation on the input data to obtain the computation result is a process of processing the input data by a neural network model to obtain the output result.

It may be understood that the RISC-V processor in the voice processing system according to the present embodiment may send one NPU instruction to the NPU each time until the neural network computation of the input data is completed, or send all the NPU instructions to the NPU at once.

The neural network computation in the present embodiment includes at least one of main computation, special computation, auxiliary computation and CISC control of the input data. Specific manners of the neural network computation are described above and not repeated herein.

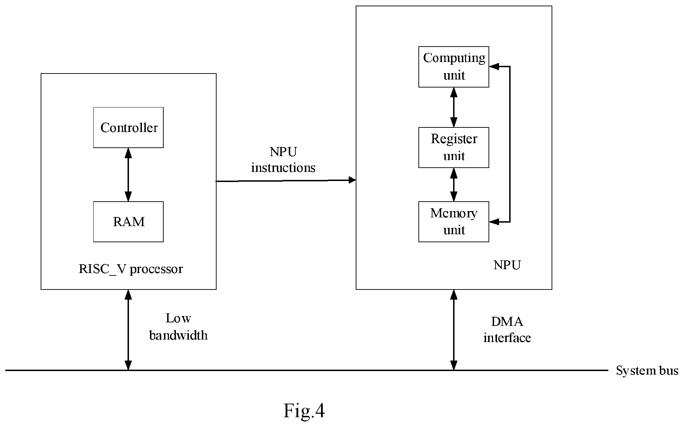

Fig. 4 is a schematic diagram according to a fourth embodiment of the present application. As shown in Fig. 4, an RISC-V processor is located on the left side and includes a controller and an RAM containing predefined NPU instructions; the controller supports a real time operating system (RTOS), and is configured to decode the NPU instructions obtained from the RAM and then send the decoded NPU instructions to an NPU. The NPU is located on the right side, connected with a system bus through a DMA interface, so as to acquire external input data, or the like, and the NPU performs neural network computation according to the received NPU instructions, and includes a memory unit, a register unit and a computing unit; the register unit is configured to store data acquired from the memory unit, such that the computing unit may conveniently take and use the corresponding data at any time, thus improving a computing efficiency; the memory unit stores model parameter data and model computation intermediate data by dividing a plurality of storage groups, such that data loading and computation operations may be executed in parallel; the computing unit is configured to realize one of main computation, special computation, auxiliary computation and CISC control according to the received NPU instructions, data for the main computation and the special computation may be acquired by the register unit, and data for the auxiliary computation may be acquired directly by the memory unit.

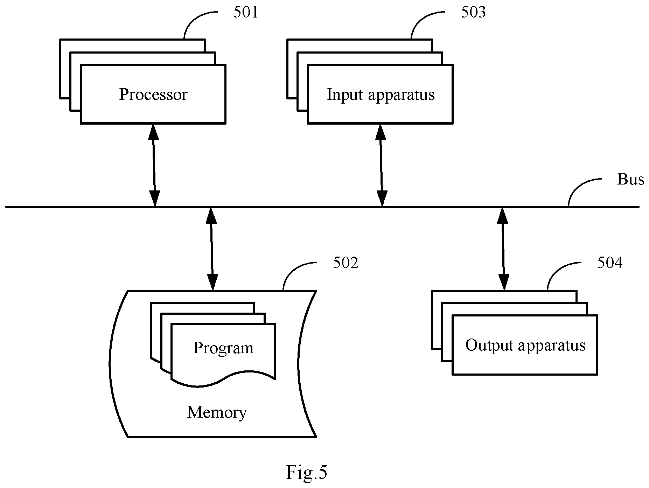

Fig. 5 is a block diagram of an exemplary electronic device configured to implement the embodiment of the present application. The electronic device is intended to represent various forms of digital computers, such as laptop computers, desktop computers, workstations, personal digital assistants, servers, blade servers, mainframe computers, and other appropriate computers. The electronic device may also represent various forms of mobile apparatuses, such as personal digital processors, cellular telephones, smart phones, wearable devices, and other similar computing apparatuses. The components shown herein, their connections and relationships, and their functions, are meant to be exemplary only, and are not meant to limit implementation of the present application described and/or claimed herein.

As shown in Fig. 5, the electronic device includes one or more processors 501, a memory 502, and interfaces configured to connect the components, including high-speed interfaces and low-speed interfaces. The components are interconnected using different buses and may be mounted at a common motherboard or in other manners as desired. The processor may process instructions for execution within the electronic device, including instructions stored in or at the memory to display graphical information for a GUI at an external input/output apparatus, such as a display device coupled to the interface. In other implementations, plural processors and/or plural buses may be used with plural memories, if desired. Also, plural electronic devices may be connected, with each device providing some of necessary operations (for example, as a server array, a group of blade servers, or a multi-processor system). In Fig. 5, one processor 501 is taken as an example.

The memory 502 is configured as the non-transitory computer readable storage medium according to the present application. The memory stores instructions executable by the at least one processor to cause the at least one processor to perform functions of the embodiments of the present application. The non-transitory computer readable storage medium according to the present application stores computer instructions for causing a computer to perform the functions of the embodiments of the present application.

The memory 502 which is a non-transitory computer readable storage medium may be configured to store non-transitory software programs, non-transitory computer executable programs and modules, such as program instructions/modules corresponding to the functions of the embodiments of the present application. The processor 501 executes various functional applications and data processing of a server, that is, implements the functions of the embodiments of the present application, by running the non-transitory software programs, instructions, and modules stored in the memory 502.

The memory 502 may include a program storage area and a data storage area, wherein the program storage area may store an operating system and an application program required for at least one function; the data storage area may store data created according to use of the electronic device, or the like. Furthermore, the memory 502 may include a high-speed random access memory, or a non-transitory memory, such as at least one magnetic disk storage device, a flash memory device, or other non-transitory solid state storage devices. In some embodiments, optionally, the memory 502 may include memories remote from the processor 501, and such remote memories may be connected to the electronic device via a network. Examples of such a network include, but are not limited to, the Internet, intranets, local area networks, mobile communication networks, and combinations thereof.

The electronic device may further include an input apparatus 503 and an output apparatus 504. The processor 501, the memory 502, the input apparatus 503 and the output apparatus 504 may be connected by a bus or other means, and Fig. 5 takes the connection by a bus as an example.

The input apparatus 503 may receive input numeric or character information and generate key signal input related to user settings and function control of the electronic device, such as a touch screen, a keypad, a mouse, a track pad, a touch pad, a pointing stick, one or more mouse buttons, a trackball, a joystick, or the like. The output apparatus 504 may include a display device, an auxiliary lighting apparatus (for example, an LED) and a tactile feedback apparatus (for example, a vibrating motor), or the like. The display device may include, but is not limited to, a liquid crystal display (LCD), a light emitting diode (LED) display, and a plasma display. In some implementations, the display device may be a touch screen.

Various implementations of the systems and technologies described here may be implemented in digital electronic circuitry, integrated circuitry, application specific integrated circuits (ASIC), computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmitting data and instructions to, a storage system, at least one input apparatus, and at least one output apparatus.

These computer programs (also known as programs, software, software applications, or codes) include machine instructions for a programmable processor, and may be implemented using high-level procedural and/or object-oriented programming languages, and/or assembly/machine languages. As used herein, the terms "machine readable medium" and "computer readable medium" refer to any computer program product, device and/or apparatus (for example, magnetic discs, optical disks, memories, programmable logic devices (PLD)) for providing machine instructions and/or data for a programmable processor, including a machine readable medium which receives machine instructions as a machine readable signal. The term "machine readable signal" refers to any signal for providing machine instructions and/or data for a programmable processor.

To provide interaction with a user, the systems and technologies described here may be implemented on a computer having: a display apparatus (for example, a cathode ray tube (CRT) or liquid crystal display (LCD) monitor) for displaying information to a user; and a keyboard and a pointing apparatus (for example, a mouse or a trackball) by which a user may provide input for the computer. Other kinds of apparatuses may also be used to provide interaction with a user; for example, feedback provided for a user may be any form of sensory feedback (for example, visual feedback, auditory feedback, or tactile feedback); and input from a user may be received in any form (including acoustic, voice or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN) and the Internet.

A computer system may include a client and a server. Generally, the client and the server are remote from each other and interact through the communication network. The relationship between the client and the server is generated by virtue of computer programs which run on respective computers and have a client-server relationship to each other. The server may be a cloud server, also called a cloud computing server or a cloud host, and is a host product in a cloud computing service system, so as to overcome the defects of high management difficulty and weak service expansibility in conventional physical host and virtual private server (VPS) service.

With the technical solution of the embodiments of the present application, the neural network computation involved in the voice processing model may be rapidly and accurately implemented off-line with the predefined NPU instructions in the RISC-V processor and the architectural design between the memory unit and the computing unit in the NPU, thereby improving the processing efficiency of the off-line voice processing task.

It should be understood that various forms of the flows shown above may be used and reordered, and steps may be added or deleted. For example, the steps described in the present application may be executed in parallel, sequentially, or in different orders, which is not limited herein as long as the desired results of the technical solution disclosed in the present application may be achieved.

The above-mentioned implementations are not intended to limit the scope of the present application. It should be understood by those skilled in the art that various modifications, combinations, sub-combinations and substitutions may be made, depending on design requirements and other factors. Any modification, equivalent substitution and improvement made within the spirit and principle of the present application all should be included in the extent of protection of the present application.s

## Claims

1. A voice processing system, comprising:
a neural-network processing unit (NPU) and an RISC-V processor;
wherein the RISC-V processor comprises predefined NPU instructions, the RISC-V processor is configured to send the NPU instructions to the NPU to cause the NPU to perform corresponding neural network computation;
the NPU comprises a memory unit and a computing unit, and the memory unit comprises a plurality of storage groups; the computing unit is configured to execute one of main computation, special computation, auxiliary computation and complex instruction set computer (CISC) control according to the received NPU instructions.

2. The voice processing system according to claim 1, wherein the predefined NPU instructions comprise basic vector operation instructions and instructions dedicated to the neural network computation.

3. The voice processing system according to claim 1, wherein the plurality of storage groups comprised in the memory unit are configured to store model parameter data of a neural network and intermediate data generated in a model computation process of the neural network respectively.

4. The voice processing system according to claim 1, wherein the memory size of the memory unit is determined by:
setting an initial memory size of the memory unit;
determining corresponding running information of the memory unit in the initial memory size; and
when the running information does not meet a preset requirement, adjusting the initial memory size, performing the operation repeatedly until the determined running information meets the preset requirement, and taking an adjustment result of the initial memory size as the memory size of the memory unit.

5. The voice processing system according to claim 1, wherein the computing unit is configured to:
complete the neural network computation by an operation of multiplying matrices by matrices or by vectors.

6. The voice processing system according to claim 1, wherein the computing unit is configured to:
in response to the received NPU instruction being a main computation instruction, convert the format of the input data into a floating point format with half precision, and convert the format of the model parameter data of the neural network into a signed integer int8 format with 8 bits; and
complete the main computation of the input data by means of multiplying the half precision by int8.

7. The voice processing system according to claim 1, wherein the computing unit is configured to:
in response to the received NPU instruction being the main computation instruction, in the case where a model used by the neural network is a preset model, convert the formats of the input data and the model parameter data into the floating point formats with half precision; and
complete the main computation of the input data by means of multiplying the half precision by the half precision.

8. The voice processing system according to claim 1, wherein the computing unit is configured to:
in response to the received NPU instruction being a special computation instruction, determine the type of a transcendental function; and
complete the special computation of the input data utilizing a computation method corresponding to the function type.

9. The voice processing system according to claim 1, wherein the computing unit is configured to:
in response to the received NPU instruction being an auxiliary computation instruction, convert input data of a convolutional network into a matrix; and
perform full-connection computation according to the matrix obtained by conversion to finish the auxiliary computation of the input data.

10. The system according to claim 1, wherein the computing unit is configured to:
in response to the received NPU instruction being a CISC control instruction, input the input data and the model parameter data into specially designed hardware; and
acquire output data returned by the hardware to complete the CISC control of the input data.

11. A voice processing method, comprising:
acquiring (S301) voice data to be processed;
taking (S302) the voice data to be processed as input data of a voice processing system, and performing (S302), by the voice processing system, neural network computation on the input data to obtain an output result; and
taking (S303) the output result as a voice processing result of the voice data to be processed,
wherein the voice processing system is obtained according to any one of claims 1 to 10.

12. The voice processing method according to claim 11, wherein the performing, by the voice processing system, neural network computation on the input data to obtain an output result comprises:
performing, by the NPU in the voice processing system, the neural network computation corresponding to the NPU instructions on the input data according to the NPU instructions sent by the RISC-V processor; and
taking the obtained computation result as the output result.

13. The voice processing method according to claim 12, wherein the performing neural network computation corresponding to the NPU instructions on the input data comprises:
performing at least one of main computation, special computation, auxiliary computation and CISC control on the input data.

14. An electronic device, comprising:
at least one processor;
a memory connected with the at least one processor communicatively; and
the voice processing system according to any one of claims 1 to 10;
wherein the memory stores instructions executable by the at least one processor to cause the at least one processor to perform the voice processing method according to any one of claims 11 to 13.

15. A non-transitory computer readable storage medium with computer instructions stored thereon, wherein the computer instructions are used for causing a computer to perform the voice processing method according to any one of claims 11 to 13.
